# DEMANDE DE BREVET EUROPEEN

(11) **EP 1 978 716 A1**
(43) Date de publication de la demande: **08.10.2008**
(21) Numéro de dépôt: 08103058.7
(22) Date de dépôt: 28.03.2008
(51) Int. Cl.: H04L 29/08

(54) **SYSTÈME DE TRANSFERT DE CONTENUS D'UN SERVEUR DE CONTENUS VERS DES TERMINAUX MOBILES RATTACHÉS À UN RÉSEAU CELLULAIRE À COUVERTURE RADIO NON UNIFORME ET À MÉCANISME DE TRANSFERT DISCONTINU DE CONTENUS**

(30) Priorité: 05.04.2007 FR 0754308
(71) Demandeur: Alcatel Lucent, 75008 Paris (FR)
(72) Inventeur: Alberi-Morel, Marie Line, 94230, CACHAN (FR); Kerboeuf, Sylvaine, 91140, VILLEBON-SUR-YVETTE (FR); Faye, Jean-Claude, 91170, GIF SUR YVETTE (FR)
(74) Mandataire: El Manouni, Josiane

(57) **Abrégé**

Un système est dédié au transfert de contenus vers au moins un terminal mobile (UE) comprenant une application (LC) utilisant des contenus et capable de se connecter à un réseau radio comprenant un réseau d'accès radio (RAR) à couverture radio non uniforme et mettant en oeuvre un mécanisme de transfert discontinu de contenus. Ce système comprend i) un premier dispositif (D1) implanté en amont du réseau d'accès radio (RAR) et comportant une première mémoire (M1) pouvant stocker temporairement des contenus et un contrôleur (CS1) chargé de contrôler le stockage dans la première mémoire (M1) de contenu(s) issu(s) d'un serveur de contenus (SC) et d'extraire ce(s) contenu(s) stocké(s) afin de le(s) transférer vers l'application (LC) sous forme de blocs de données comportant un entête d'une couche protocolaire, dédiée au stockage temporaire et intercalée entre les couches protocolaires UDP/IP et RTP, et ii) au moins un second dispositif (D2) implanté dans le terminal (UE) et chargé de contrôler l'accès à une seconde mémoire (M2) pouvant stocker des contenus, contrôlés par un contrôleur (CS2), devant être utilisés par l'application (LC) et de dialoguer avec le premier dispositif (D1) au niveau de la couche protocolaire de stockage temporaire afin de permettre le transfert discontinu de contenu(s) de la première mémoire (M1) vers la seconde mémoire (M2), puis vers l'application (LC).

## Description

L'invention concerne les réseaux de communication radio à couverture radio non uniforme et mettant en oeuvre un mécanisme de transfert discontinu de contenus, et plus précisément le contrôle des sessions de transmission de contenus non interactifs, entre autres multimédia, entre un serveur de contenus et au moins un terminal de communication radio connecté à un réseau radio du type précité.

On entend ici par « réseau de communication radio à couverture radio non uniforme » un réseau d'accès radio dans lequel la qualité de réception (ou qualité du lien radio) varie en fonction de la position au sein de la zone de couverture radio. Il est rappelé que la qualité de réception (ou qualité du lien radio) est quantifiable au moyen de paramètres comme par exemple le CIR (pour « Carrier to Interference Ratio » - rapport entre la puissance du signal reçu et la somme des puissances du bruit interne du récepteur et du bruit d'interférence provoqué par l'environnement) ou le BER (« Bit Error Rate » - taux d'erreur de bits reçus) ou encore le PER (pour « Packet Error Rate » - taux de paquets erronés reçus). En présence de telles discontinuités de la qualité de réception, il est donc possible de décomposer la zone de couverture radio en sous-zones de niveaux de qualité de réception différents.

Par ailleurs, on entend ici par « mécanisme de transfert discontinu de contenus » un mécanisme consistant à favoriser le transfert de contenus vers les terminaux mobiles lorsque ces derniers se trouvent momentanément situés dans les sous-zones dont le niveau de qualité de réception est le plus élevé, lesquelles constituent une zone généralement appelée « zone de transfert ». Plus précisément, lorsqu'une application d'un terminal mobile a requis un contenu, ce dernier lui est transmis selon un débit qui est très supérieur à son débit normal d'utilisation par l'application requérante lorsque ledit terminal mobile se trouve momentanément situé dans une zone de transfert. Le terminal mobile (ou l'application requérante) comprend alors une mémoire tampon (ou cache) dans laquelle il (elle) stocke temporairement le contenu transféré selon un haut débit, ce qui permet de continuer d'alimenter l'application en contenu lorsque ledit terminal mobile quitte la zone de transfert et se retrouve momentanément dans une sous-zone où le transfert de contenu n'est en principe pas autorisé. On notera que le mécanisme autorise malgré tout les tentatives de transfert de contenu en dehors des zones de transfert lorsqu'un niveau élevé de qualité de service (QoS) doit être garanti, dans le but d'éviter une interruption de service au niveau de l'application. On notera également que ce mécanisme, qui est notamment décrit dans le document brevet EP 1549096, nécessite la connaissance des informations relatives à la mobilité des terminaux mobiles.

De plus, dans ce qui suit on entend par « terminal de communication radio » tout équipement de communication capable d'échanger des données par voie d'ondes, sous la forme de signaux, avec un autre équipement (éventuellement de réseau) via le réseau (de communication) radio auquel il est rattaché. Il pourra donc s'agir, par exemple, d'un téléphone mobile, ou d'un assistant personnel numérique (ou PDA) ou d'un ordinateur portable équipé d'un dispositif de communication radio.

Le mécanisme de transfert discontinu de contenus permet d'optimiser l'utilisation des ressources du réseau radio et donc d'augmenter les capacités de ce dernier en termes de nombre d'usagers pouvant être simultanément servis et/ou de qualité de service, grâce à la prise en compte de la mobilité des terminaux. Cependant, ce mécanisme, qui concerne les usagers qui se déplacent tout comme le mécanisme de gestion de la mobilité (qui garantie la continuité de service aux usagers qui se déplacent et dépend du type du réseau d'accès radio qui le met en oeuvre), doit être systématiquement adapté en fonction de la méthode de gestion de la mobilité et du type du réseau d'accès radio qui sont utilisés, afin de ne pas empêcher les réseaux d'accès radio d'effectuer certaines de leurs fonctionnalités.

L'invention a pour but d'assurer la cohérence du mécanisme de transfert discontinu de contenus dans un réseau radio et du mécanisme de gestion de la mobilité dans le but d'assurer leur indépendance.

Elle propose à cet effet un système dédié au transfert de contenus (issus d'un serveur de contenus) vers au moins un terminal (de communication) mobile disposant d'une application utilisant des contenus et propre à se connecter à un réseau (de communication) radio comprenant un réseau d'accès radio à couverture radio non uniforme (voire discontinue) et mettant en oeuvre un mécanisme de transfert discontinu de contenus.

Ce système de transfert de contenus se caractérise par le fait qu'il comprend :
- un premier dispositif destiné à être implanté en amont d'une entrée du réseau d'accès radio et comportant une première mémoire destinée à stocker temporairement des contenus et un contrôleur chargé de contrôler le stockage dans cette première mémoire de contenu(s) issu(s) du serveur de contenus et d'extraire ce(s) contenu(s) stocké(s) afin de le(s) transférer vers l'application du terminal sous forme de blocs de données (par exemple des paquets) comportant un entête d'une couche protocolaire dédiée au stockage temporaire et intercalée entre la couche protocolaire UDP/IP et une couche protocolaire dédiée au transport des contenus (par exemple RTP/RTCP), et
- au moins un second dispositif destiné à être implanté dans le terminal et chargé de contrôler l'accès à une seconde mémoire, destinée à stocker des contenus devant être utilisés par l'application, et de dialoguer avec le premier dispositif au niveau de la couche protocolaire de stockage temporaire pour permettre le transfert discontinu de contenu(s) de la première mémoire vers la seconde mémoire, puis vers l'application.

Le système selon l'invention peut comporter d'autres caractéristiques qui peuvent être prises séparément ou en combinaison, et notamment :
- le contrôleur de son premier dispositif peut être chargé de faire passer ce dernier pour l'application auprès du serveur de contenus afin d'établir une session de transfert de contenu à sa place, de transmettre au serveur de contenus des messages relatifs à la session, et de stocker temporairement dans la première mémoire des contenus transmis pendant une session par le serveur de contenus et destinés au moins à l'application ;
- chaque second dispositif peut être chargé de se faire passer pour le serveur de contenus auprès de l'application afin de lui transmettre, selon un débit d'utilisation normal, des contenus transférés par le premier dispositif et, en cas de réception pendant une session de transfert de contenu d'un message signalant une prochaine sortie du terminal mobile hors d'une zone de transfert de contenu du réseau d'accès radio, d'ordonner au premier dispositif de lui transférer des blocs de données de contenu selon un débit strictement supérieur au débit normal d'utilisation de contenu par l'application afin de les stocker dans la seconde mémoire et ainsi pouvoir continuer à les transmettre à l'application lorsque son terminal mobile sera situé en dehors de la zone de transfert de contenu. _{[0]}En fait, le second dispositif (qui est dans un terminal mobile) stocke dans sa mémoire les données qui ont été transmises par le premier dispositif audit terminal mobile selon le débit radio maximal qu'il peut supporter (parfois bien supérieur au débit normal d'utilisation). Il est ensuite chargé de transmettre à l'application de son terminal mobile (qui dispose de sa propre mémoire, mais de faible capacité), selon son débit normal d'utilisation, toutes les données qu'il a stockées dans sa mémoire. En pratique, on n'attend pas que le terminal mobile s'apprête à quitter la zone de transfert pour envoyer les données au second dispositif selon son débit radio maximal. On commence en effet à lui envoyer les données dès qu'il entre dans une zone de transfert, et une fois que l'on a suffisamment rempli la seconde mémoire on continue à l'alimenter selon le rythme normal d'utilisation. Le second dispositif envoie au premier dispositif un ou des messages signalant le départ imminent du terminal mobile de la zone de transfert. Ces messages peuvent être des rapports de CIR (BER (« Bit Error Rate ») ou analogue), ou une indication sur la diminution de la valeur du débit maximal possible pour le terminal mobile ;
- chaque second dispositif peut éventuellement comprendre une seconde mémoire ;
- son premier dispositif peut par exemple être implanté en amont d'un équipement de réseau de type dit GGSN (pour « Gateway GPRS Support Node ») qui fait partie d'un coeur de réseau du réseau radio ;
- chaque second dispositif peut par exemple être agencé sous la forme d'une interface applicative de programmation (ou API pour « Application Programming Interface ») ;
- chaque second dispositif peut par exemple être téléchargeable dans un terminal mobile.

L'invention propose également un terminal de communication mobile, propre à se connecter à un réseau de communication radio comprenant un réseau d'accès radio à couverture radio non uniforme et mettant en oeuvre un mécanisme de transfert discontinu de contenus, et comprenant une application utilisant des contenus et un second dispositif faisant partie d'un système de transfert de contenus du type de celui présenté ci-avant, ainsi qu'une éventuelle seconde mémoire destinée à stocker des contenus devant être utilisés par l'application.

L'invention propose également un équipement de réseau destiné à faire partie d'un réseau de communication radio, comprenant un réseau d'accès radio à couverture radio non uniforme et mettant en oeuvre un mécanisme de transfert discontinu de contenus, et équipé d'un premier dispositif faisant partie d'un système de transfert de contenus du type de celui présenté ci-avant.

L'invention est particulièrement bien adaptée, bien que de façon non exclusive, aux réseaux de communication radio de type mobile ou cellulaire. Mais, d'une manière générale elle concerne tout type de réseau radio, comprenant un réseau d'accès radio à couverture radio non uniforme (voire discontinue) et mettant en oeuvre un mécanisme de transfert discontinu de contenus, et assurant la gestion de la mobilité des terminaux mobiles qui sont rattachés à son réseau d'accès radio.

D'autres caractéristiques et avantages de l'invention apparaîtront à l'examen de la description détaillée ci-après, et des dessins annexés, sur lesquels :
- la figure 1 illustre de façon très schématique un exemple de réalisation d'un système de transfert de contenus selon l'invention implanté en partie dans un téléphone mobile connecté à un réseau de téléphonie mobile (auquel est connecté un serveur de contenus) et en partie dans un équipement de réseau dudit réseau de téléphonie mobile, et
- la figure 2 illustre de façon très schématique un exemple d'empilements de couches protocolaires au sein d'un terminal mobile (UE) selon l'invention, d'un équipement de réseau (ER3) selon l'invention et d'un serveur de contenus (SC).

Les dessins annexés pourront non seulement servir à compléter l'invention, mais aussi contribuer à sa définition, le cas échéant.

L'invention a pour objet de permettre la mise en oeuvre du mécanisme de transfert discontinu de contenus vers des terminaux de communication mobiles dans un réseau de communication radio comprenant un réseau d'accès radio à couverture radio non uniforme, indépendamment de la méthode de gestion de la mobilité qu'il utilise et du type de son réseau d'accès radio.

Dans ce qui suit, on considère à titre d'exemple non limitatif que le réseau de communication radio est un réseau de téléphonie cellulaire (ou mobile). Mais, l'invention n'est pas limitée à ce type de réseau de communication radio. Elle concerne en effet tous les réseaux de communication radio à couverture radio non uniforme, voire discontinue, et donc comprenant un réseau d'accès radio dans lequel la qualité de réception (ou qualité du lien radio) varie en fonction de la position au sein de la zone de couverture radio, et mettant en oeuvre un mécanisme de transfert discontinu de contenus.

Par ailleurs, dans ce qui suit on entend par « terminal de communication radio » tout équipement de communication muni d'une application utilisant des contenus non interactifs (éventuellement multimédia) et capable d'échanger des données sous la forme de signaux radio avec une station de base ou un point d'accès d'un réseau d'accès radio d'un réseau radio. Il pourra donc s'agir, par exemple, d'équipements d'utilisateurs, tels que des téléphones mobiles (ou cellulaires) ou des ordinateurs portables ou des assistants personnels numériques (ou PDA) munis d'un équipement de communication radio.

On considère dans ce qui suit que les terminaux de communication radio sont des téléphones mobiles UE équipés d'une application LC dédiée à la lecture de contenus définissant des vidéos, par exemple au format MPEG4. L'application LC se présente donc ici sous la forme d'un lecteur (éventuellement enregistreur), plus connu sous l'expression anglaise « media player », chargé de diffuser des vidéos reçues sur l'écran du téléphone mobile UE.

On notera que l'invention n'est pas limitée à ce type d'application LC. Elle concerne en effet toute application utilisant tout type de contenu (multimédia ou non) transmis sous la forme de blocs de données (par exemple des paquets, éventuellement de type IP) et provenant d'un serveur de contenus SC connecté au réseau radio auquel est connecté le téléphone mobile UE qui la contient, ou qui est joignable via ce réseau radio. A titre d'exemple non limitatif, le serveur de contenus SC peut être un serveur IP.

On notera que l'application LC comprend habituellement une mémoire de faible capacité de stockage.

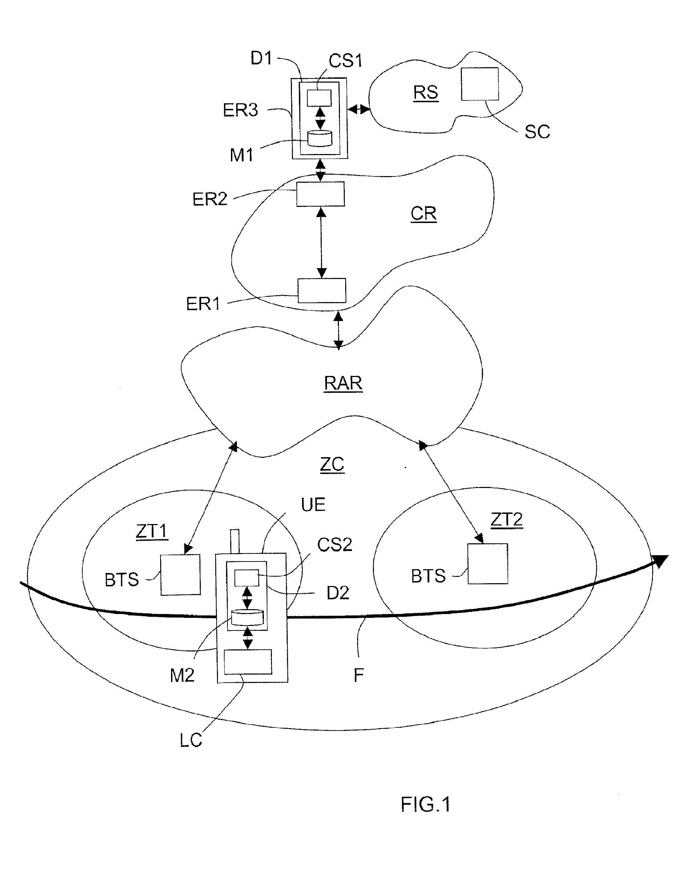

Comme cela est illustré sur la figure 1, un réseau (de téléphonie) mobile (par exemple de type GSM) peut, d'une façon très schématique mais néanmoins suffisante à la compréhension de l'invention, être résumé à un coeur de réseau (ou « Core Network » en anglais) CR couplé à un réseau d'accès radio (appelé BSS) RAR, lui-même raccordé à un système de gestion de réseau ou NMS (pour « Network Management System »), non représenté.

Le réseau d'accès radio RAR comporte principalement des stations de base appelées BTS et des contrôleurs de réseau radio ou noeuds (appelés BSCs et non représentés), raccordés entre eux.

Chaque station de base BTS est associée à au moins une cellule (logique) couvrant une partie de la zone de couverture radio ZC du réseau radio et dans laquelle des terminaux mobiles UE peuvent établir (ou poursuivre) des liaisons radio, et notamment recevoir des contenus transmis (éventuellement en mode diffusion (ou « broadcast »)). Chaque contrôleur de réseau radio est associé à au moins une cellule (logique) et est donc couplé à au moins une station de base BTS.

Le réseau d'accès radio RAR ayant une couverture radio non uniforme, sa zone de couverture radio ZC comporte des sous-zones, appelées zones de transfert ZTi, dans lesquelles le niveau de qualité de réception moyen est le plus élevé et où le transfert discontinu de contenus est autorisé. Dans l'exemple illustré seules deux zones de transfert ZT1 et ZT2 ont été représentées. Mais, le nombre de zones de transfert peut prendre n'importe quelle valeur supérieure ou égale à un (1).

Le coeur de réseau CR comprend des équipements de réseau qui pour certains sont raccordés notamment aux contrôleurs de réseau radio. Parmi ces équipements on peut notamment citer dans le cas d'un réseau de type 2,5G ou 3G au moins un noeud SGSN (pour « Serving GPRS Support Node ») ER1, raccordé notamment à des contrôleurs de réseau radio, et au moins un noeud GGSN (pour « Gateway GPRS Support Node ») ER2 connecté au noeud SGSN et assurant la connexion du coeur de réseau CR à un réseau de services RS (par exemple de type IP) matérialisant les services mis à la disposition des utilisateurs des terminaux mobiles UE par l'opérateur du réseau GSM, et en particulier les services de diffusion de contenus (comme par exemple des données multimédia constituant des vidéos).

L'invention propose un système destiné à transférer des contenus issus du serveur de contenus SC vers au moins un téléphone mobile UE connecté au réseau d'accès radio RAR.

Comme illustré sur la figure 1, ce système comprend essentiellement des premier D1 et second(s) D2 dispositifs. Le premier dispositif D1 est implanté dans le réseau, et plus précisément en amont d'une entrée de son réseau d'accès radio RAR, tandis que chaque second dispositif D2 est implanté dans un téléphone mobile UE. L'expression « en amont » signifie ici dans le coeur de réseau CR du réseau ou dans une plateforme (ou un réseau) de service RS et non du côté du réseau d'accès radio RAR du réseau radio.

On notera que dans l'exemple non limitatif illustré le premier dispositif D1 est implanté dans un équipement de réseau ER3 qui est placé, par exemple dans le cas d'un réseau de type 2,5G ou 3G, en amont de l'entrée d'un noeud GGSN ER2 du réseau, qui constitue ce que l'homme de l'art appelle un point d'ancrage de mobilité (ou « Mobility Anchor Point »). Cet équipement de réseau ER3 est par exemple de type serveur.

Un premier dispositif D1 et au moins un second dispositif D2 interviennent conjointement chaque fois qu'une session de transmission de contenus doit être établie entre au moins une application LC (implantée dans un téléphone mobile UE) et le serveur de contenus SC. Afin de simplifier la description, on considère ci-après que chaque contenu issu du serveur de contenus SC est destiné à un unique téléphone mobile UE, et donc que la session de transfert de contenu n'implique qu'une application LC (implantée dans ce téléphone mobile UE) et le serveur de contenus SC. Mais, l'invention s'applique également aux sessions de transfert de contenu qui impliquent plusieurs applications LC (implantées dans plusieurs téléphones mobiles UE) et un serveur de contenus SC. L'invention peut également permettre de gérer plusieurs applications, éventuellement reliées à des serveurs de contenus différents, comme par exemple un serveur de transfert de fichiers et un serveur de contenus multimédia, implantées dans un même terminal mobile UE ou bien dans plusieurs.

Lorsque l'application LC veut établir une session avec un serveur de contenus SC, elle génère une requête d'établissement de session demandant le transfert d'au moins un contenu (par exemple une vidéo), et demande à son téléphone mobile UE de transmettre cette requête vers sa destination, via son réseau radio de rattachement. Cette requête est alors interceptée par le second dispositif D2 qui est implanté dans son téléphone mobile UE, lequel comprend par exemple à cet effet un contrôleur CS2. A partir de cette interception, le contrôleur CS2 est chargé, entre autres, de faire passer le second dispositif D2 pour le serveur de contenus SC auprès de l'application LC pendant la durée de la session de transfert de contenu(s).

Le contrôleur CS2 ordonne ensuite à son second dispositif D2 d'établir une connexion avec le premier dispositif D1 pour lui transmettre la requête. A réception de cette requête, le premier dispositif D1 la transmet à un contrôleur CS1 qu'il comprend et qui est chargé, entre autres, de le faire passer pour l'application LC auprès du serveur de contenus SC.

Puis, le contrôleur CS1 ordonne ensuite à son premier dispositif D1 de transmettre la requête au serveur de contenus SC afin qu'une session soit établie entre le premier dispositif D1 (qui s'est substitué à l'application LC) et le serveur de contenus SC.

Une fois la session établie, le serveur de contenus SC peut alors transmettre au premier dispositif D1 les blocs de données (par exemple des paquets IP) qui définissent le(s) contenu(s) désigné(s) dans la requête. Le premier dispositif D1 peut alors échanger des messages de signalisation avec le serveur de contenus SC, comme par exemple des rapports de réception de contenu afin de lui signaler qu'il a bien reçu le(s) contenu(s) désigné(s) dans la requête.

A titre d'exemple, on peut utiliser le protocole de transport RTP (pour « Rapid Transfer Protocol ») pour transporter (transmettre) les blocs de données (ou paquets IP) de contenu dans le cadre d'une session multimédia, et le protocole de contrôle RTCP (pour « Real time Transport Control Protocol ») pour l'échange de messages de contrôle (comme par exemple des rapports de réception) relatifs à cette session. Mais, tout autre protocole dédié au transport de données de service dans le cadre de session(s) peut être utilisé.

A titre d'exemple, le protocole RTSP (pour « Real Time Streaming Protocol ») peut être utilisé pour échanger les messages de signalisation pour l'établissement de la session multimédia. Mais, tout autre protocole dédié à la signalisation de session de service peut être utilisé, et notamment le protocole SIP (pour « Session Initiation Protocol »).

Lorsque le premier dispositif D1 reçoit des paquets IP de contenu du serveur de contenus SC, son contrôleur CS1 analyse leurs entêtes et lui adresse des instructions pour qu'il les stocke temporairement dans une première mémoire M1. En fait, le contrôleur CS1 assure la gestion des paquets IP de contenu reçus (emplacements de stockage, ordre de délivrance, pérennité, et analogue) en fonction d'une politique définie. C'est donc le contrôleur CS1 qui fournit au premier dispositif D1 les instructions nécessaires à l'extraction des paquets IP stockés temporairement dans la première mémoire M1 et à leur retransmission vers chaque second dispositif D2 concerné, soit selon un débit élevé (mode rafale (ou « burst ») quand le taux de remplissage de la première mémoire M1 est élevé, soit sensiblement selon un débit (moyen) correspondant sensiblement à celui utilisé par le serveur de contenus SC.

Cette première mémoire M1 peut être de type cache. Les données stockées dans la première mémoire M1 et demandées par un terminal mobile peuvent être partagées avec d'autres utilisateurs qui demandent la même application. Dans ce cas, le premier dispositif D1 constitue ce que l'homme de l'art appelle en anglais un « proxy/cache » (équipement intermédiaire à mémoire cache).

Si les données stockées dans la première mémoire M1 et demandées par un terminal mobile ne sont pas partagées avec d'autres utilisateurs, alors le premier dispositif D1 constitue ce que l'homme de l'art appelle en anglais un « proxy/buffer » (équipement intermédiaire à mémoire).

On notera que le contrôleur CS1 du premier dispositif D1 peut être informé du positionnement d'un téléphone mobile UE par rapport à une station de base BS par le second dispositif D2 de ce téléphone mobile UE, via des messages (par exemple en indiquant la qualité du lien radio), afin d'assurer l'indépendance vis-à-vis du réseau radio. D'une manière générale, les premier D1 et second(s) D2 dispositifs s'échangent des messages d'information, des messages de signalisation et des messages relatifs aux sessions de transfert de contenu(s) et à leur traitement, qui sont conformes au protocole de signalisation choisi.

On notera que le premier dispositif D1 communique le(s) contenu(s) au second dispositif D2 au moyen de messages dédiés (contenant les données mises en lignes de cache) conformes à un protocole de transport choisi, comme par exemple SCTP (pour « Stream Control Transport Protocol ») ou un protocole propriétaire spécifique.

Les messages de contrôle provenant du second dispositif D2 et destinés au premier dispositif D1 comprennent un certain nombre d'informations, comme par exemple un indicateur du débit possible sur le lien radio, un indicateur de la quantité de données déjà stockées dans la mémoire M2 du dispositif D2 (ou un indicateur de taux de remplissage de la mémoire M2), un identifiant de session de transfert de contenu(s), un identifiant de l'utilisateur du téléphone mobile UE, ainsi qu'éventuellement un identifiant de la station de base (ou du point d'accès) BTS auquel le téléphone mobile UE est rattaché.

Le contrôleur CS1 du premier dispositif D1 peut, lorsqu'il est informé que le téléphone mobile UE est de nouveau situé dans une zone de transfert ZTi, extraire de la première mémoire M1 les paquets IP constituant un contenu qui est destiné à l'application LC requérante (qui s'y trouvent temporairement stockés), afin de le transférer vers le second dispositif D2 auquel elle est couplée sous la forme de blocs de données (ou paquets IP) comportant un entête additionnel dédié au stockage temporaire.

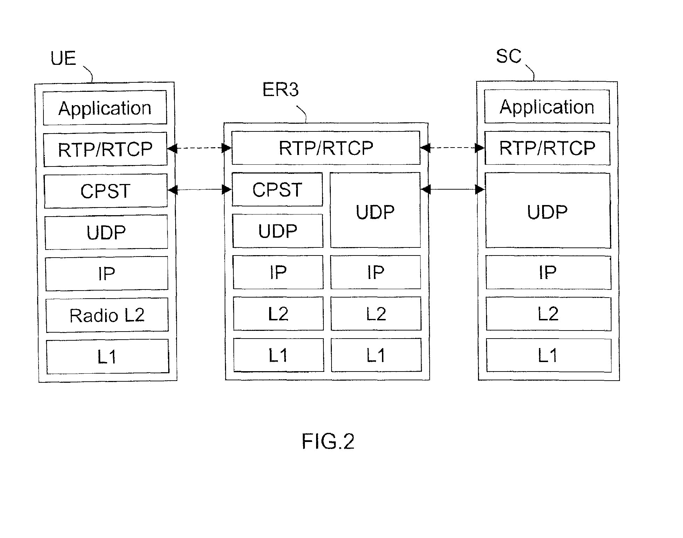

Comme cela est schématiquement illustré sur la figure 2, cet entête additionnel constitue, au sein de l'empilement de couches protocolaires de l'équipement de réseau ER3 qui comprend le premier dispositif D1, une couche protocolaire additionnelle CPST qui est spécifiquement dédiée au stockage temporaire et au transport des données temporairement stockées et qui est intercalée entre la couche protocolaire dite UDP/IP et la couche protocolaire qui est dédiée au transport des contenus (ici RTP/RTCP). L'entête additionnel contient de préférence au moins un identifiant de la source (serveur de contenus SC), un identifiant destinataire (le terminal mobile UE), un identifiant de session, un identifiant du flux de données, un identifiant de ligne de cache, et la taille du paquet. Dans le cas où le protocole SCTP (à la place du protocole UDP) est utilisé pour transporter les données entre les premier D1 et second D2 dispositifs, l'entête additionnel dédié au stockage temporaire se restreint à un identifiant de contenu de cache et un identifiant de ligne de cache et est incorporé dans la partie données (ou payload ») du paquet SCTP.

Le contrôleur CS2 du second dispositif D2 est également agencé pour insérer des entêtes additionnels au niveau de la couche protocolaire additionnelle CPST dans des paquets IP qui définissent des messages destinés au premier dispositif D1, comme par exemple les messages de signalisation ou d'information (voir figure 2). De même, le contrôleur CS1 du premier dispositif D1 est agencé pour lire les entêtes additionnels de la couche protocolaire additionnelle CPST, qui sont contenus dans les paquets IP qui définissent les messages issus du second dispositif D2.

On notera que la couche CPST a plusieurs rôles. Un premier rôle consiste à ajouter (et enlever) un entête « cache » aux données qui sont issues d'un protocole d'ordre supérieur (i.e. RTP). En effet les paquets RTP qui arrivent dans le premier dispositif D1 en provenance du serveur de contenus SC sont éventuellement fragmentés puis placés dans des paquets « cache » avec un entête (présenté ci-après) dans une unité de données appelée ligne de cache. Un deuxième rôle consiste à échanger des messages de contrôle entre un second dispositif D2 et le premier dispositif D1 (précisant la taille de cache, éventuellement le débit radio, et analogue). Un troisième rôle consiste à assurer une fonction de transport fiable des données de lignes de cache et une fonction de contrôle de flux (les lignes de cache sont envoyées au rythme du débit radio maximum qui est possible pour le terminal mobile concerné). Ces deux dernières fonctions peuvent être assurées par un protocole standard tel que SCTP.

On notera que les paquets IP à entête additionnel, qui contiennent les données définissant les contenus et qui sont générés par le premier dispositif D1, sont transférés vers le second dispositif D2 au moyen du même protocole de transport que celui utilisé pour les transporter (sans cet entête additionnel) jusqu'au niveau du premier dispositif D1. Il s'agit par exemple du protocole RTP/RTCP, comme illustré sur la figure 2.

On notera que lorsque le téléphone mobile UE entre dans une zone de transfert ZTi et que des données le concernent, le contrôleur CS1 ordonne à son premier dispositif D1 de lui envoyer ces données par rafales (ou bursts ») selon un débit supérieur ou égal en moyenne au débit normal d'utilisation par son application LC (par exemple si la première mémoire M1 de stockage temporaire des données de contenu dans le coeur du réseau d'accès est vide). Il est rappelé que dans un réseau traditionnel, on envoie habituellement les données pendant toute la durée de la session en respectant un débit moyen équivalent au débit normal d'utilisation de l'application LC concernée, quelle que soit la position du terminal mobile dans la cellule radio.

Lorsque le second dispositif D2 reçoit des paquets IP de contenu en provenance du premier dispositif D1, il les transmet à une seconde mémoire M2. La gestion de ces données reçus (emplacements de stockage, ordre de délivrance, pérennité, et analogue) est assurée par son contrôleur CS2 en fonction d'une politique définie. Ce dernier est en effet agencé pour lire les entêtes additionnels, contenus dans les paquets IP reçus, au niveau de la couche protocolaire additionnelle CPST (voir la figure 2 sur laquelle on distingue dans la pile protocolaire la partie dédiée au stockage cache (ou temporaire) et la partie dédiée au transport de cache).

Les données de contenu reçues du premier dispositif D1 sont donc systématiquement stockées de façon temporaire dans la seconde mémoire M2, et extraites progressivement sur ordre du contrôleur CS2 afin d'être transmises par sa fonction proxy à l'application LC selon son débit normal d'utilisation (y compris si son téléphone mobile UE a quitté la zone de transfert ZTi).

En effet, dans ce dernier cas mentionné entre parenthèses le second dispositif D2 a stocké dans la seconde mémoire M2 un grand nombre de paquets IP de contenu avant que son téléphone mobile UE ait quitté la zone de transfert ZTi, si bien qu'il peut continuer à alimenter son application LC pendant un certain temps lorsque son téléphone mobile UE se trouve entre deux zones de transfert ZT1 et ZT2.

La seconde mémoire M2 est par exemple de type cache. Elle peut par exemple faire partie du second dispositif D2, comme illustré sur la figure 1. Le second dispositif D2 constitue alors ce que l'homme de l'art appelle un « proxy/cache » (équipement intermédiaire à mémoire cache). Dans une variante, la seconde mémoire M2 peut faire partie du téléphone mobile UE. Dans ce cas, ce dernier constitue un proxy (équipement intermédiaire).

Le second dispositif D2 peut par exemple être agencé sous la forme d'une interface applicative de programmation (ou API pour « Application Programming Interface »), notamment de type « socket ». Une telle API doit bien entendu être compatible avec l'interface qui est utilisée pour la programmation des couches protocolaires classiques au sein du téléphone mobile UE.

Par ailleurs, le second dispositif D2 peut par exemple être téléchargeable dans son téléphone mobile UE. Dans ce cas, il peut être réalisé sous la forme de modules logiciels (ou informatiques). Mais, dans une variante il pourrait également être réalisé sous la forme de circuits électroniques ou d'une combinaison de circuits électroniques et de logiciels.

Le premier dispositif D1, et notamment son contrôleur CS1 et sa première mémoire M1, peuvent être également réalisés sous la forme de modules logiciels (ou informatiques). Mais, dans une variante ils pourraient être réalisés sous la forme de circuits électroniques ou d'une combinaison de circuits électroniques et de logiciels.

Dans ce qui précède on a décrit un exemple de mise en oeuvre de l'invention dans lequel la session de transfert de contenu n'implique qu'une application implantée dans un terminal mobile et un serveur de contenus. Mais, l'invention s'applique également aux sessions de transfert de contenu qui impliquent plusieurs (au moins deux) applications (implantées dans plusieurs terminaux mobiles) et un serveur de contenus. Dans ce cas, le premier dispositif est agencé de manière à échanger des messages avec chacun des seconds dispositifs implantés dans les différents terminaux mobiles et à transférer vers ces derniers un même contenu stocké temporairement et qui leur est destiné.

Grâce au positionnement de la couche protocolaire dédiée au stockage temporaire entre la couche protocolaire UDP/IP et la couche protocolaire dédiée au transport des contenus, ainsi qu'aux positionnements respectifs des premier et second(s) dispositifs en amont du réseau d'accès radio et dans les terminaux mobiles, le mécanisme classique de transfert discontinu de contenus est indépendant de la méthode de gestion de la mobilité utilisée et du type du réseau d'accès radio, permettant ainsi à ce dernier d'effectuer toutes ses fonctionnalités classiques standardisées.

L'invention ne se limite pas aux modes de réalisation de système de transfert de contenus, de terminal de communication mobile et d'équipement de réseau décrits ci-avant, seulement à titre d'exemple, mais elle englobe toutes les variantes que pourra envisager l'homme de l'art dans le cadre des revendications ci-après.

## Revendications

1. Système de transfert de contenus, issus d'un serveur de contenus (SC), vers au moins un terminal de communication mobile (UE) comprenant une application (LC) utilisant des contenus et propre à se connecter à un réseau de communication radio comprenant un réseau d'accès radio (RAR) à couverture radio non uniforme et mettant en oeuvre un mécanisme de transfert discontinu de contenus, **caractérisé en ce qu'**il comprend i) un premier dispositif (D1) implanté en amont d'une entrée dudit réseau d'accès radio (RAR) et comportant une première mémoire (M1) propre à stocker temporairement des contenus et un contrôleur (CS1) agencé pour contrôler le stockage dans ladite première mémoire (M1) de contenu(s) issu(s) dudit serveur de contenus (SC) et pour extraire ce(s) contenu(s) stocké(s) afin de le(s) transférer vers ladite application (LC) sous forme de blocs de données comportant un entête d'une couche protocolaire dédiée au stockage temporaire et intercalée entre une couche protocolaire dite UDP/IP et une couche protocolaire dédiée au transport des contenus, et ii) au moins un second dispositif (D2) implanté dans ledit terminal (UE) et agencé pour contrôler l'accès à une seconde mémoire (M2) propre à stocker des contenus devant être utilisés par ladite application (LC) et pour dialoguer avec ledit premier dispositif (D1) au niveau de ladite couche protocolaire de stockage temporaire de manière à permettre le transfert discontinu de contenu(s) de ladite première mémoire (M1) vers ladite seconde mémoire (M2), puis vers ladite application (LC).

2. Système selon la revendication 1, **caractérisé en ce que** ledit contrôleur (CS1) du premier dispositif (D1) est agencé pour se faire passer pour ladite application (LC) auprès dudit serveur de contenus (SC), de manière à établir une session de transfert de contenu à sa place, à transmettre audit serveur de contenus (SC) des messages relatifs à la session, et à stocker temporairement dans ladite première mémoire (M1) des contenus transmis lors d'une session par ledit serveur de contenus (SC) et destinés au moins à ladite application (LC).

3. Système selon l'une des revendications 1 et 2, **caractérisé en ce que** ledit second dispositif (D2) est agencé pour se faire passer pour ledit serveur de contenus (SC) auprès de ladite application (LC) de manière à lui transmettre selon un débit normal d'utilisation des contenus transférés par ledit premier dispositif (D1) et, en cas de réception pendant une session de transfert de contenu d'un message signalant une prochaine sortie dudit terminal mobile (UE) hors d'une zone de transfert de contenu dudit réseau d'accès radio (RAR), pour ordonner audit premier dispositif (D1) de lui transférer les blocs de données de contenu selon un débit strictement supérieur au débit normal d'utilisation de contenu par ladite application (LC) de manière à les stocker dans ladite seconde mémoire (M2) et ainsi pouvoir continuer à les transmettre à ladite application (LC) lorsque son terminal mobile (UE) sera situé en dehors de ladite zone de transfert de contenu.

4. Système selon l'une des revendications 1 à 3, **caractérisé en ce que** ledit premier dispositif (D1) est propre à être implanté en amont d'un équipement de réseau de type dit GGSN faisant partie d'un coeur de réseau dudit réseau radio.

5. Système selon l'une des revendications 1 à 4, **caractérisé en ce que** ledit second dispositif (D2) est agencé sous la forme d'une interface applicative de programmation (« API »).

6. Système selon l'une des revendications 1 à 5, **caractérisé en ce que** ledit second dispositif (D2) comprend ladite seconde mémoire (M2).

7. Système selon l'une des revendications 1 à 6, **caractérisé en ce que** ledit second dispositif (D2) est téléchargeable dans ledit terminal mobile (UE).

8. Système selon l'une des revendications 1 à 7, **caractérisé en ce que** ladite couche protocolaire de transport de contenus est choisie dans un groupe comprenant RTP/RTCP et RTSP.

9. Terminal de communication mobile (UE) comprenant une application (LC) utilisant des contenus et propre à se connecter à un réseau de communication radio comprenant un réseau d'accès radio (RAR) à couverture radio non uniforme et mettant en oeuvre un mécanisme de transfert discontinu de contenus, **caractérisé en ce qu'**il comprend un second dispositif (D2) faisant partie d'un système de transfert de contenus selon l'une des revendications précédentes.

10. Terminal selon la revendication 9, **caractérisé en ce qu'**il comprend une seconde mémoire (M2), couplée audit second dispositif (D2) et à ladite application (LC) et propre à stocker des portions de contenus devant être utilisés par ladite application (LC).

11. Equipement de réseau (ER) pour un réseau de communication radio comprenant un réseau d'accès radio (RAR) à couverture radio non uniforme et mettant en oeuvre un mécanisme de transfert discontinu de contenus, **caractérisé en ce qu'**il comprend un premier dispositif (D1) faisant partie d'un système de transfert de contenus selon l'une des revendications 1 à 8.
